# EUROPEAN PATENT APPLICATION

(11) **EP 4 336 888 A1**
(43) Date of publication of application: **13.03.2024**
(21) Application number: 22824034.7
(22) Date of filing: 27.05.2022
(51) Int. Cl.: H04W 24/08

(54) **COMMUNICATION METHOD AND COMMUNICATION APPARATUS**

(30) Priority: 18.06.2021 CN 202110681003
(71) Applicant: Huawei Technologies Co., Ltd., Longgang Shenzhen, Guangdong 518129 (CN)
(72) Inventor: FAN, Bo, Shenzhen, Guangdong 518129 (CN); ZHOU, Hongrui, Shenzhen, Guangdong 518129 (CN); ZHANG, Xi, Shenzhen, Guangdong 518129 (CN); CHEN, Lei, Shenzhen, Guangdong 518129 (CN); LIU, Fengwei, Shenzhen, Guangdong 518129 (CN); YUAN, Shitong, Shenzhen, Guangdong 518129 (CN)
(74) Representative: Huawei European IPR
(86) International application number: PCT/CN2022/095489
(87) International publication number: WO 2022/262554

(57) **Abstract**

This application provides a communication method and apparatus. The information transmission method includes: receiving measurement configuration information from a network device, where the measurement configuration information is used to configure a channel measurement resource and M interference measurement resources, and M is a positive integer greater than or equal to 1; and sending a bitmap to the network device, where the bitmap includes one or more bits, each of the one or more bits corresponds to one or more interference measurement resources, a value of each of the one or more bits indicates interference of the one or more interference measurement resources corresponding to each bit to the channel measurement resource, and the M interference measurement resources include the one or more interference measurement resources. According to the communication method provided in embodiments of this application, a terminal device can report, by reporting the bitmap, impact of the interference measurement resources on the channel measurement resource in one time of measurement. This saves transmission resources and improves transmission efficiency.

## Description

This application claims priority to Chinese Patent Application No. 202110681003.6, filed with the China National Intellectual Property Administration on June 18, 2021 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

A 5th generation (5th generation, 5G) mobile communication system uses high-frequency communication, that is, uses an ultra-high frequency band (above 6 GHz) signal for data transmission. A main problem of the high-frequency communication is that signal energy sharply decreases as a transmission distance increases, and this results in a short signal transmission distance. To overcome this problem, an analog beam technology is used in the high-frequency communication. A large-scale antenna array is used for weighted processing, so that signal energy is concentrated within a small range, to form a beam-like signal (which is referred to as an analog beam, and briefly referred to as a beam), to increase a transmission distance.

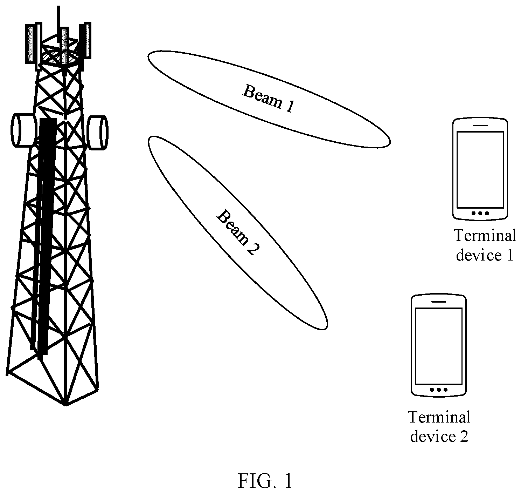

A network device may separately transmit data to a plurality of terminal devices by using a plurality of beams simultaneously, and each beam corresponds to a terminal device. As shown in FIG. 1, the network device respectively transmits data to a terminal device 1 and a terminal device 2 by using a beam 1 and a beam 2. The terminal device 1 receives the data transmitted on the beam 1, and the terminal device 2 receives the data transmitted on the beam 2. The terminal device 1 also receives a signal on the beam 2, and the terminal device 2 also receives a signal on the beam 1. These signals are referred to as interference signals. When the network device simultaneously transmits data to a plurality of terminal devices by using a plurality of beams, for each terminal device, a beam on which data is transmitted is referred to as a serving beam, and another beam is referred to as an interference beam. The interfering beam causes interference to data transmitted on the serving beam. This affects transmission performance. Specifically, the interference signal on the interference beam causes a signal to interference plus noise ratio (SINR, Signal to Noise and Interference Ration) of the serving beam to decrease. This reduces transmission throughput.

To reduce interference caused by an interference beam to a serving beam, for each terminal device, the network device needs to know which beams cause strong interference to a serving beam of the terminal device, so as to avoid simultaneous transmission of a beam with relatively strong interference and the serving beam when transmission is performed by using a plurality of beams. However, in the conventional technology, after performing interference measurement, the terminal device reports impact of only one interfering beam on a serving beam at a time, or reports only total impact of a plurality of interfering beams on a serving beam at a time, resulting in poor flexibility and a waste of resources.

### SUMMARY

This application provides a communication method, so that a terminal device can report, by reporting a bitmap, impact of each interference beam on a serving beam in one time of interference measurement. This reduces a waste of resources and improves resource utilization. In this way, a network device can determine, based on the bitmap reported by the terminal device, impact of each interference beam on the serving beam. When data is simultaneously transmitted to a plurality of terminal devices by using a plurality of beams, simultaneous transmission of a plurality of beams with relatively strong interference can be avoided, thereby reducing mutual interference between beams, and improving transmission performance.

According to a first aspect, a communication method is provided, including: receiving measurement configuration information from a network device, where the measurement configuration information is used to configure a channel measurement resource and M interference measurement resources, and M is a positive integer greater than or equal to 1; and sending a bitmap to the network device, where the bitmap includes one or more bits, each of the one or more bits corresponds to one or more interference measurement resources, a value of each of the one or more bits indicates interference of the one or more interference measurement resources corresponding to each bit to the channel measurement resource, and the M interference measurement resources include the one or more interference measurement resources.

According to the communication method provided in this application, impact of each interference measurement resource on the channel measurement resource can be reported in one time of interference measurement by sending the bitmap to the network device. This improves reporting efficiency and reduces resource waste.

With reference to the first aspect, in some implementations of the first aspect, the interference of the one or more interference measurement resources to the channel measurement resource is whether a degree of the interference of the one or more interference measurement resources to the channel measurement resource is greater than a first threshold. Specifically, if the interference of the one or more interference measurement resources to the channel measurement resource is greater than the first threshold, a value of a bit corresponding to the one or more interference measurement resources is 1, and vice versa, a value of a bit corresponding to the one or more interference measurement resources is 0. Alternatively, if the interference of the one or more interference measurement resources to the channel measurement resource is greater than the first threshold, a value of a bit corresponding to the one or more interference measurement resources is 0, and vice versa, a value of a bit corresponding to the one or more interference measurement resources is 1.

With reference to the first aspect, in some implementations of the first aspect, when each bit corresponds to one interference measurement resource, that the degree of the interference of the one interference measurement resource to the channel measurement resource is greater than the first threshold may be that a signal strength of the one interference measurement resource is greater than a second threshold. The second threshold is an absolute threshold, and is compared with a result obtained by performing direct measurement on the interference measurement resource.

With reference to the first aspect, in some implementations of the first aspect, when each bit corresponds to one interference measurement resource, that the degree of the interference of the one interference measurement resource to the channel measurement resource is greater than the first threshold may be that a difference between a first signal to interference plus noise ratio of the channel measurement resource and a second signal to interference plus noise ratio of the channel measurement resource is greater than a third threshold. The third threshold is a relative threshold, the first signal to interference plus noise ratio is a signal to interference plus noise ratio of the channel measurement resource when interference of the one interference measurement resource is not considered, and the second signal to interference plus noise ratio is a signal to interference plus noise ratio of the channel measurement resource when the interference of the one interference measurement resource is considered. The third threshold is compared with a difference between a measurement result of the channel measurement resource when the one interference measurement resource is interfered and a measurement result of the channel measurement resource when the interference measurement resource is not interfered.

With reference to the first aspect, in some implementations of the first aspect, when each bit corresponds to a plurality of interference measurement resources, that the degree of the interference of the plurality of interference measurement resources to the channel measurement resource is greater than the first threshold may be that an average signal strength of the plurality of interference measurement resources is greater than a second threshold.

With reference to the first aspect, in some implementations of the first aspect, when each bit corresponds to a plurality of interference measurement resources, that the degree of interference of the plurality of interference measurement resources to the channel measurement resource is greater than the first threshold may be that a difference between a third signal to interference plus noise ratio of the channel measurement resource and a fourth signal to interference plus noise ratio of the channel measurement resource is greater than the third threshold. The third signal to interference plus noise ratio is a signal to interference plus noise ratio of the channel measurement resource when interference of the plurality of interference measurement resources is not considered, and the fourth signal to interference plus noise ratio is a signal to interference plus noise ratio of the channel measurement resource that is determined by using an average interference strength of the plurality of interference measurement resources as interference.

With reference to the first aspect, in some implementations of the first aspect, the first threshold, and/or the second threshold, and/or the third threshold are configured by using the measurement configuration information.

With reference to the first aspect, in some implementations of the first aspect, when each bit corresponds to a plurality of interference measurement resources, the plurality of interference measurement resources are a plurality of consecutive interference measurement resources determined based on a configuration sequence of the interference measurement resources.

According to a second aspect, a communication method is provided, including: sending measurement configuration information to a terminal device, where the measurement configuration information is used to configure a channel measurement resource and M interference measurement resources, and M is a positive integer greater than or equal to 1; and receiving a bitmap from the terminal device, where the bitmap includes one or more bits, each of the one or more bits corresponds to one or more interference measurement resources, a value of each of the one or more bits indicates interference of the one or more interference measurement resources corresponding to each bit to the channel measurement resource, and the M interference measurement resources include the one or more interference measurement resources.

According to the communication method provided in this application, impact of each interference measurement resource on the channel measurement resource can be obtained in one time of interference measurement by receiving the bitmap from the terminal device. This improves reporting efficiency and reduces resource waste.

With reference to the second aspect, in some implementations of the second aspect, the interference of the one or more interference measurement resources to the channel measurement resource is determined based on the bitmap, where the interference of the one or more interference measurement resources to the channel measurement resource is determined by whether a degree of the interference of the one or more interference measurement resources to the channel measurement resource is greater than a first threshold.

According to a third aspect, a communication apparatus is provided, including a unit configured to perform steps of the communication method in the first aspect.

In a design, the communication apparatus is a communication chip. The communication chip may include an input circuit or an interface configured to send information or data, and an output circuit or an interface configured to receive information or data.

In another design, the communication apparatus is a communication device (for example, a terminal device). A communication chip may include a transmitter configured to send information or data, and a receiver configured to receive information or data.

According to a fourth aspect, a communication apparatus is provided, including a unit configured to perform steps of the communication method in the second aspect.

In a design, the communication apparatus is a communication chip. The communication chip may include an input circuit or an interface configured to send information or data, and an output circuit or an interface configured to receive information or data.

In another design, the communication apparatus is a communication device (for example, a network device). A communication chip may include a transmitter configured to send information or data, and a receiver configured to receive information or data.

According to a fifth aspect, a communication device is provided, including a processor and a memory. The memory is configured to store a computer program. The processor is configured to invoke the computer program from the memory and run the computer program, so that the communication device performs the communication method according to any one of the first aspect and the second aspect or the implementations of the first aspect and the second aspect.

Optionally, there are one or more processors, and there are one or more memories.

Optionally, the memory may be integrated into the processor, or the memory and the processor may be separately disposed.

Optionally, the communication apparatus further includes a transmit machine (transmitter) and a receive machine (receiver).

According to a sixth aspect, a computer program product is provided. The computer program product includes a computer program (which may also be referred to as code or instructions). When the computer program is run, a computer is enabled to perform the communication method according to any one of the first aspect and the second aspect or the implementations of the first aspect and the second aspect.

According to a seventh aspect, a computer-readable medium is provided. The computer-readable medium stores a computer program (which may also be referred to as code or instructions). When the computer program is run, a computer is enabled to perform the communication method according to any one of the first aspect and the second aspect or the implementations of the first aspect and the second aspect.

According to an eighth aspect, a chip system is provided. The chip system includes a memory and a processor. The memory is configured to store a computer program, and the processor is configured to invoke the computer program from the memory and run the computer program, so that a communication device on which the chip system is installed performs the communication method according to any one of the first aspect and the second aspect or the implementations of the first aspect and the second aspect.

The chip system may include an input circuit or interface configured to send information or data, and an output circuit or interface configured to receive information or data.

### BRIEF DESCRIPTION OF DRAWINGS

FIG. 1 is a schematic diagram of simultaneous transmission of a plurality of beams according to an embodiment of this application;
FIG. 2 is a diagram of a system architecture according to an embodiment of this application;
FIG. 3 is a schematic diagram of an example of a communication method according to an embodiment of this application;
FIG. 4 is a schematic diagram of a communication apparatus according to an embodiment of this application;
FIG. 5 is a schematic diagram of another communication apparatus according to an embodiment of this application; and
FIG. 6 is a schematic diagram of still another communication apparatus according to an embodiment of this application.

### DESCRIPTION OF EMBODIMENTS

The following describes technical solutions of this application with reference to accompanying drawings.

The technical solution of embodiments of this application may be used in various communication systems, for example, a global system for mobile communications (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, and a 5th generation (5th Generation, 5G) system or a new radio (New Radio, NR) system.

The terminal device in embodiments of this application may include various handheld devices, vehicle-mounted devices, wearable devices, or computing devices that have a wireless communication function, or other processing devices connected to a wireless modem. The terminal may be a mobile station (Mobile Station, MS), a subscriber unit (subscriber unit), a cellular phone (cellular phone), a smart phone (smart phone), a wireless data card, a personal digital assistant (Personal Digital Assistant, PDA for short) computer, a tablet computer, a wireless modem (modem), a handheld device (handset), a laptop computer (laptop computer), a machine type communication (Machine Type Communication, MTC) terminal, or the like. This is not limited in embodiments of this application.

In embodiments of this application, the network device is an apparatus deployed in a radio access network to provide a wireless communication function for the terminal device. The network device may include macro base stations, micro base stations (also referred to as small cells), relay stations, and access points in various forms. In systems that use different radio access technologies, names of the network device may vary, such as a BTS (Base Transceiver Station, base transceiver station) in a GSM (Global System for Mobile Communications, global system for mobile communications) or a CDMA (Code Division Multiple Access, code division multiple access) network, an NB (NodeB) in WCDMA (Wideband Code Division Multiple Access, wideband code division multiple access), an eNB or eNodeB (Evolutional NodeB) in LTE (Long Term Evolution, long term evolution). Alternatively, the network device may be a radio controller in a CRAN (Cloud Radio Access Network, cloud radio access network) scenario. Alternatively, the network device may be a base station device in a 5G network or a network device in a future evolved PLMN network. Alternatively, the network device may be a wearable device or a vehicle-mounted device. In embodiments of this application, a transmission and reception point (Transmission and Reception Point, TRP) may be considered as a network device, or a part of a network device, for example, a transceiver part. For example, in a cell using a plurality of TRPs, downlink signals in the cell are simultaneously sent to the terminal device by using a plurality of TRPs. In this case, the plurality of TRPs may be considered as the network device at the same time, or the plurality of TRPs may be considered as a plurality of transmitters of the entire network device.

To facilitate related description of the communication method in embodiments of this application, the following first describes key terms in this application.

### 1. Beam

The beam may be represented in a protocol as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), QCL (quasi-colocation, Quasi-colocation) information, a QCL assumption, a QCL indication, or the like. The beam may be indicated by a transmission configuration indication-state (TCI-state) parameter or a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, the TCI-state (a DL TCI-state and a UL TCI-state), the spatial relation, or the like. The foregoing terms are also equivalent to each other. Alternatively, the beam may be replaced with another term representing the beam. This is not limited in this application.

A beam for sending a signal may be referred to as a transmit beam (transmission beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or spatial transmission setting (spatial transmission setting). A downlink transmit beam may be indicated by the TCI-state.

A beam used to receive a signal may be referred to as a receive beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmit beam may be indicated by using the spatial relation spatial relation, an uplink TCI-state, or an SRS resource (indicating a transmit beam using this SRS). Therefore, an uplink beam may also be replaced with the SRS resource.

The transmit beam may refer to distribution of signal strengths formed in different directions in space after a signal is transmitted through an antenna, and the receive beam may refer to distribution of signal strengths in different directions in space of a radio signal received from an antenna.

The beam may be a wide beam, a narrow beam, or a beam of another type. A technology for forming the beam may be a beamforming technology or another technology. The beamforming technology may be specifically a digital beamforming technology, an analog beamforming technology, a hybrid digital, analog beamforming technology, or the like

The beam usually corresponds to a resource. For example, when beam measurement is performed, the network device measures different beams through different resources. The terminal device feeds back measured resource quality, and the network device learns of quality of a corresponding beam. During data transmission, beam information is also indicated using a resource corresponding to the beam information. For example, the network device indicates information about a PDSCH beam of the terminal device by using a TCI field in a DCI.

Optionally, a plurality of beams that have same or similar communication features may be considered as one beam. One beam may include one or more antenna ports, and is for transmitting a data channel, a control channel, a sounding signal, and the like. The one or more antenna ports forming the beam may also be considered as one antenna port set.

In embodiments of this application, unless otherwise specified, the beam is a transmit beam of the network device. During beam measurement, each beam of the network device corresponds to one resource. Therefore, a resource index may be used to uniquely identify the beam corresponding to the resource.

### 2. Resource

During beam measurement, a beam corresponding to a resource may be uniquely identified by using an index of the resource. The resource may be an uplink signal resource, or may be a downlink signal resource. An uplink signal includes but is not limited to a sounding reference signal (sounding reference signal, SRS) and a demodulation reference signal (demodulation reference signal, DMRS). A downlink signal includes but is not limited to a channel state information reference signal (channel state information reference signal, CSI-RS), a cell specific reference signal (cell specific reference signal, CS-RS), a UE specific reference signal (user equipment specific reference signal, US-RS), a demodulation reference signal (demodulation reference signal, DMRS), and a synchronization signal/physical broadcast channel block (synchronization system /physical broadcast channel block, SS/PBCH block). The SS/PBCH block may be referred to as a synchronization signal block (synchronization signal block, SSB) for short.

The resource is configured by using RRC (Radio Resource Control, radio resource control signaling) signaling. In a configuration structure, a resource is a data structure, including a related parameter of an uplink/downlink signal corresponding to the resource, for example, a type of the uplink/downlink signal, a resource element that carries the uplink/downlink signal, sending time and a sending periodicity of the uplink/downlink signal, and a quantity of ports used to send the uplink/downlink signal. Each resource of the uplink/downlink signal has a unique index, to identify the resource of the downlink signal. It may be understood that the index of the resource may also be referred to as an identifier of the resource. This is not limited in embodiments of this application.

The channel resource is a resource configured by the network device for channel measurement. The channel resource may be used to measure an RSRP (Reference signal receiving power, reference signal received power), a CQI (Channel Quality Indication, channel quality indication), and an SINR (Signal to Interference plus Noise Ratio), and other channel information. During CQI and SINR measurement, an interference resource also needs to be configured.

The interference resource is a resource that is configured by the network device and that is used for channel measurement. When channel information such as the CQI and the SINR is measured, these interference resources are used as interference sources to calculate the CQI and the SINR together with the channel resource. For example, when an SINR of one channel resource in one interference resource needs to be measured, energy of the channel resource may be used as a numerator, and energy of the interference resource may be used as a denominator, to calculate the SINR.

It should be noted that a resource set is a set including a group of resources, and is configured by using RRC signaling. The resource set may be a resource setting resource set, a resource set resource setting, a subset of a resource subset resource set, or a resource set in another form.

### 3. Beam management or beam measurement

The beam measurement may be used to measure beam quality, for example, to measure an RSRP or an SINR of a beam.

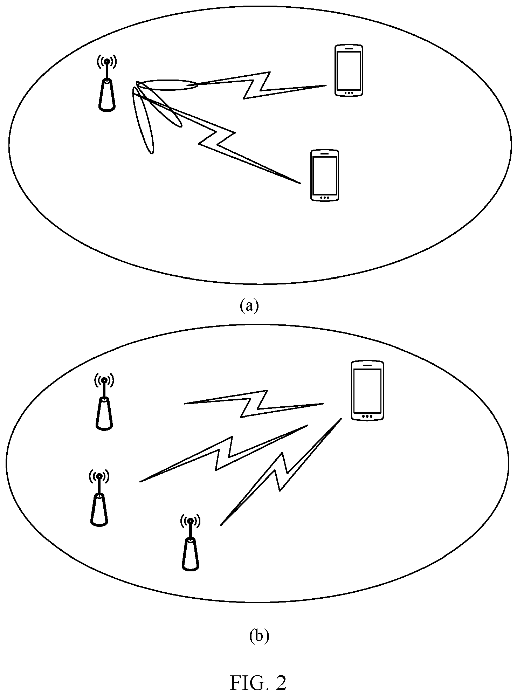

FIG. 2 is a diagram of a system architecture according to an embodiment of this application. As shown in (a) of FIG. 2, a single network device may transmit data or control signaling to one or more terminal devices. As shown in (b) of FIG. 2, a plurality of network devices may simultaneously transmit data or control signaling to a single terminal device.

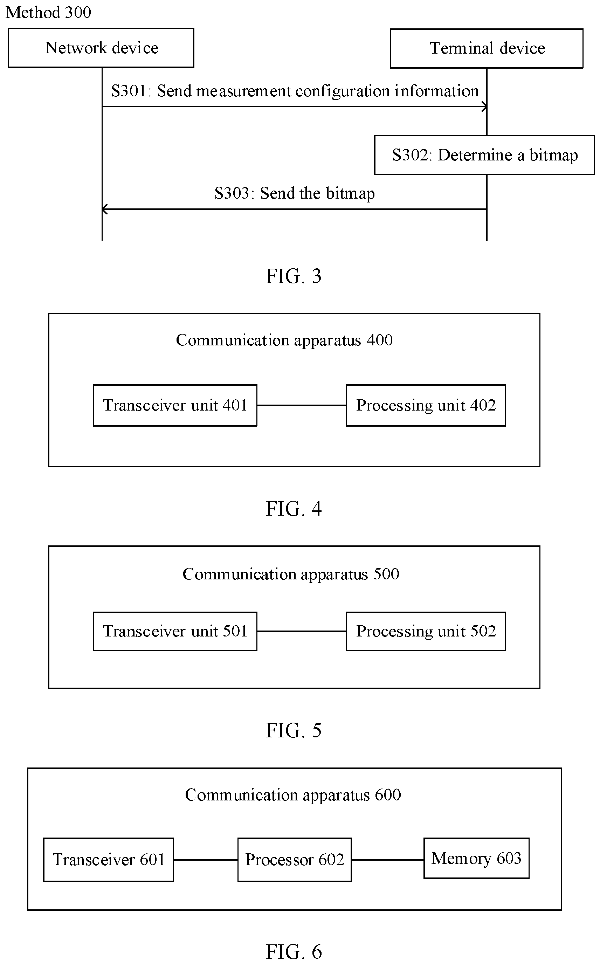

FIG. 3 is a schematic flowchart of a communication method according to an embodiment of this application. As shown in FIG. 3, the communication method 300 includes the following steps.

S301: A network device sends measurement configuration information to a terminal device.

Preferably, the measurement configuration information is used to configure M (M≥1) interference measurement resources and one channel measurement resource for the terminal device. It should be noted that the channel measurement resource corresponds to a serving beam and is used to measure information corresponding to the serving beam, and the interference measurement resource corresponds to an interfering beam and is used to measure information corresponding to the interfering beam.

It should be noted that the M interference measurement resources may be included in a resource setting (resource setting), a resource set (resource set), or a resource subset (resource subset).

Optionally, N (N > 1) channel measurement resources and a plurality of interference measurement resources respectively corresponding to the N channel measurement resources may be simultaneously configured in the measurement configuration information. A quantity of the plurality of interference measurement resources corresponding to each channel measurement resource may be the same or may be different.

It should be noted that the N channel measurement resources may be included in one resource setting, or one resource set, or one resource subset, or the N channel measurement resources may be separately included in N resource settings, or N resource sets, or N resource subsets. It should be noted that a resource set is a subset of a resource setting, and one resource setting may include one or more resource sets. A resource subset is a subset of a resource set. One resource set may include one or more resource subsets.

Optionally, information about the to-be-measured interference measurement resource may be indicated by using MAC CE signaling or DCI signaling.

In some embodiments, the network device indicates, by using the MAC CE signaling, the information about the to-be-measured interference measurement resource. The signaling includes one or more of the following: an index of the interference measurement resource, an index of an interference measurement resource set (for example, a resource set index or a resource setting index), information (for example, index information) about a channel measurement resource or a channel measurement resource set corresponding to the interference measurement resource, information (for example, index information) about a measurement reporting configuration corresponding to the interference measurement resource, a type of the interference measurement resource, TCI-state or QCL (Quasi co-location, quasi co-location) information of the interference measurement resource, a cell corresponding to the interference measurement resource, and a BWP (Bandwidth Part, subset bandwidth) corresponding to the interference measurement resource. Optionally, the MAC CE signaling may include a bitmap, where each bit corresponds to one interference measurement resource, one group of interference measurement resources, or one or one group of interference measurement resource sets, a bit value 1 indicates that a corresponding interference measurement resource is to be measured, and a bit value 0 indicates that a corresponding interference measurement resource is not to be measured. Alternatively, the bit value 0 indicates that the corresponding interference measurement resource is to be measured, and the bit value 1 indicates that the corresponding interference measurement resource is not to be measured. Optionally, the MAC CE signaling may also directly include an index of the to-be-measured interference measurement resource.

In some embodiments, DCI may indicate information about the to-be-measured interference measurement resource, including one or more of the following: an index of the interference measurement resource, an index of an interference measurement resource set (for example, a resource set index or a resource setting index), information (for example, index information) about a channel measurement resource or a channel measurement resource set corresponding to the interference measurement resource, information (for example, index information) about a measurement reporting configuration corresponding to the interference measurement resource, a type of the interference measurement resource, TCI-state or QCL (Quasi co-location, quasi co-location) information of the interference measurement resource, a cell corresponding to the interference measurement resource, and a BWP corresponding to the interference measurement resource. Optionally, the DCI indicates the to-be-measured interference measurement resource by using a field. Each field value of the field corresponds to one or a group of interference measurement resources or one or a group of interference measurement resource sets. Optionally, when a value of the field is a field value, it indicates that the terminal device is required to measure an interference measurement resource corresponding to the field value. An interference measurement resource corresponding to each field value may be configured by using the RRC signaling, or indicated by using the MAC CE signaling. It should be noted that the field may be a newly introduced field dedicated to indicating an interference measurement resource, and may be another existing field reused.

By using the foregoing method, dynamic update of the interference measurement resource can be implemented, and flexibility of configuring the interference measurement resource is improved.

It should be noted that one channel measurement resource and M interference measurement resources corresponding to the channel measurement resource are used as an example for description in this embodiment of this application.

S302: The terminal device determines a bitmap.

Specifically, the terminal device receives the measurement configuration information, and further determines the bitmap based on the measurement configuration information. Optionally, the measurement configuration information includes a first reporting quantity, and the first reporting quantity indicates the terminal device to report the bitmap. Optionally, the terminal device reports the bitmap by default.

Optionally, the terminal device immediately performs interference measurement after receiving the measurement configuration information. Optionally, the terminal device receives the measurement configuration information, and performs measurement in each preset period based on the measurement configuration information.

In some preferred embodiments, the bitmap includes one or more bits, and each of the one or more bits corresponds to one interference measurement resource. A value of each of the one or more bits indicates interference of one interference measurement resource corresponding to the bit to the channel measurement resource.

Specifically, a value of each bit represents a value relationship between a first threshold and a degree of the interference of the one interference measurement resource corresponding to the bit to the channel measurement resource. The terminal device determines a value of a corresponding bit by determining whether the degree of the interference of the interference measurement resource to the channel measurement resource reaches the first threshold, where the first threshold may be an RSRP (Reference signal receiving power, reference signal received power) threshold, an RSSI (Received Signal Strength Indication, received signal strength indication) threshold, an RSRQ (Reference signal receiving quality, reference signal received quality) threshold, an SINR (Signal to Interference plus Noise Ratio, signal to interference plus noise ratio) threshold, a CQI (Channel Quality Indication, channel quality indication) threshold, an MCS (Modulation and Coding scheme, modulation and coding scheme) threshold, or another threshold. It should be noted that the RSRP and the RSSI are signal strength indicators, and the signal strength in this application may be specifically the RSRP, the RSSI, or another indicator. The SINR and the CQI are signal to interference plus noise ratio indicators. The signal to interference plus noise ratio in this application may specifically refer to the SINR, the CQI, or another indicator. The MCS is a counter associated with the CQI. A corresponding MCS can be determined based on the CQI. When the interference measurement resource is measured, the signal strength of the interference measurement resource may specifically refer to the RSRP and the RSSI. A degree of interference of the interference measurement resource may refer to the RSRP and the RSSI, or may refer to a signal to interference plus noise ratio corresponding to the channel measurement resource under the interference of the interference measurement resource.

Optionally, when the degree of the interference of the interference measurement resource is greater than or equal to the first threshold, a value of a bit corresponding to the interference measurement resource may be 1. When the degree of the interference of the interference measurement resource is less than the first threshold, the value of the bit corresponding to the interference measurement resource may be 0. When the degree of the interference of the interference measurement resource is greater than or equal to the first threshold, the value of the bit corresponding to the interference measurement resource may be 0. When the degree of the interference of the interference measurement resource is less than the first threshold, the value of the bit corresponding to the interference measurement resource may be 1. Herein, "greater than or equal to" may alternatively be "greater than", and "less than" may alternatively be "less than or equal to". The following describes a specific method for determining the degree of the interference.

In a possible implementation, the first threshold is an absolute threshold, and is represented by a second threshold. It should be understood that the absolute threshold corresponds to a degree of interference of one interference measurement resource to the channel measurement resource. Optionally, when the degree of the interference of the one interference measurement resource is greater than or equal to the second threshold, a value of a bit corresponding to the one interference measurement resource may be 1. When the degree of the interference of the one interference measurement resource is less than the second threshold, a value of a bit corresponding to the one interference measurement resource may be 0. Optionally, when the degree of the interference of the one interference measurement resource is greater than or equal to the second threshold, a value of a bit corresponding to the one interference measurement resource may be 0. When the degree of the interference of the one interference measurement resource is less than the second threshold, a value of a bit corresponding to the one interference measurement resource may be 1. Herein, "greater than or equal to" may alternatively be "greater than", "less than" may alternatively be replaced with "less than or equal to".

It should be noted that, the specific method for calculating the degree of the interference is related to that the degree of the interference is represented by the SINR/RSRP/CQI/RSRQ/MCS. For ease of description, the following uses a specific example for description.

By way of example rather than limitation, the degree of the interference is represented by the RSRP value, and the second threshold is an RSRP threshold. For one interference measurement resource, optionally, when an RSRP value corresponding to the interference measurement resource is greater than or equal to the second threshold, the value of the bit corresponding to the interference measurement resource is 1. When the RSRP value corresponding to the interference measurement resource is less than the second threshold, the value of the bit corresponding to the interference measurement resource is 0. Optionally, when the RSRP value corresponding to the interference measurement resource is greater than or equal to a second threshold, the value of the bit corresponding to the interference measurement resource is 0. When the RSRP value corresponding to the interference measurement resource is less than the second threshold, the value of the bit corresponding to the interference measurement resource is 1. Similarly, the foregoing method is also applicable to a case in which the second threshold is an RSRQ threshold, an SINR threshold, a CQI threshold, an MCS threshold, or another measurement parameter threshold, and only the RSRP value needs to be replaced with an RSRQ value, an SINR value, a CQI value, an MCS value, or another measured value. Herein, "greater than or equal to" may alternatively be replaced with "greater than", "less than" may alternatively be replaced with "less than or equal to".

In a possible implementation, the first threshold is a relative threshold, and is represented by a third threshold. It should be understood that the relative threshold corresponds to a degree of interference of one interference measurement resource to a channel measurement resource. By way of example rather than limitation, when interference of the one interference measurement resource is considered or when interference of the one interference measurement resource is not considered, the degree of the interference is represented by a difference of the degree of the interference of the channel measurement resource, and a value of a bit corresponding to the interference measurement resource is determined by using a value relationship between the difference and the third threshold. Optionally, when the difference is greater than or equal to the third threshold, the value of the bit corresponding to the interference measurement resource may be 1. When the difference is less than the third threshold, the value of the bit corresponding to the interference measurement resource may be 0. Optionally, when the difference is greater than or equal to the third threshold, the value of the bit corresponding to the interference measurement resource may be 0. When the difference is less than the third threshold, the value of the bit corresponding to the interference measurement resource may be 1. Herein, "greater than or equal to" may alternatively be "greater than", "less than" may alternatively be replaced with "less than or equal to".

It should be noted that, the specific method for calculating the degree of the interference is related to that the degree of the interference is represented by the SINR/RSRP/CQI/RSRQ/MCS. For ease of description, the following uses a specific example for description.

By way of example rather than limitation, the degree of the interference is represented by using an SINR value, and the third threshold is an SINR threshold. For one interference measurement resource, optionally, if a difference between an SINR value of the channel measurement resource without the interference of the interference measurement resource and an SINR value of the channel measurement resource with the interference of the interference measurement resource is greater than or equal to the third threshold, a value of a bit corresponding to the interference measurement resource may be 1. If the difference between the SINR value of the channel measurement resource without the interference of the interference measurement resource and the SINR value of the channel measurement resource with the interference of the interference measurement resource is less than the third threshold, a value of a bit corresponding to the interference measurement resource may be 0. Optionally, if a difference between an SINR value of the channel measurement resource without the interference of the interference measurement resource and an SINR value of the channel measurement resource with the interference of the interference measurement resource is greater than or equal to the third threshold, a value of a bit corresponding to the interference measurement resource may be 0. If the difference between the SINR value of the channel measurement resource without the interference of the interference measurement resource and the SINR value of the channel measurement resource with the interference of the interference measurement resource is less than the third threshold, a value of a bit corresponding to the interference measurement resource may be 1. Similarly, the method is also applicable to a case in which the third threshold is an RSRQ threshold, an SINR threshold, a CQI threshold, an MCS threshold, or another measurement parameter threshold, and only the RSRP value needs to be replaced with an RSRQ value, an RSRP value, a CQI value, an MCS value, or another measured value. Herein, "greater than or equal to" may alternatively be replaced with "greater than", and "less than" may alternatively be replaced with "greater than or equal to".

In some embodiments, the bitmap includes one or more bits, the one or more bits correspond to a plurality of interference measurement resources, and a value of each bit in the one or more bits indicates interference of a plurality of interference measurement resources corresponding to the bit to the channel measurement resource.

Optionally, the plurality of interference measurement resources are L (L > 1) consecutive interference measurement resources configured, that is, according to a configuration sequence, the L consecutive interference measurement resources are used as a group corresponding to one bit. Optionally, the L interference measurement resources may alternatively be L consecutive interference measurement resources sorted according to a resource index value sequence. Optionally, the L interference resources may alternatively be all resources configured in one resource set. In other words, the network device may configure one or more resource sets. Each resource set corresponds to one bit, or all resources in each resource set correspond to one bit. Optionally, a value of L may be indicated by measurement configuration information. Optionally, the value of L may be reported in a terminal capability reporting process. The following describes the plurality of interference measurement resources as L interference measurement resources.

Specifically, a value of each bit represents a value relationship between a first threshold and a degree of the interference of the L interference measurement resources corresponding to the bit to the channel measurement resource. Reference may be made to the foregoing description that a value of each bit indicates a degree of interference of one interference measurement resource corresponding to the bit to the channel measurement resource. The following describes a specific method for determining the degree of the interference.

In a possible implementation, the first threshold is an absolute threshold, and is represented by a second threshold. It should be understood that the absolute threshold corresponds to a degree of interference of the L interference measurement resources to a channel measurement resource. When the absolute threshold corresponds to the L interference measurement resources, the method needs to be modified adaptively. By way of example rather than limitation, the degree of the interference is represented by using the equivalent interference degree of the L interference measurement resources. In the determining method, a value of a bit corresponding to the L interference measurement resources is determined based on a value relationship between the equivalent interference degree of the L interference measurement resources and the second threshold. Optionally, when the equivalent interference degree of the L interference measurement resources is greater than or equal to the second threshold, a value of a bit corresponding to the L interference measurement resources may be 1. When the equivalent interference degree of the L interference measurement resources is less than the second threshold, a value of a bit corresponding to the L interference measurement resources may be 0. Optionally, when the equivalent interference degree of the L interference measurement resources is greater than or equal to the second threshold, a value of a bit corresponding to the L interference measurement resources may be 0. When the equivalent interference degree of the L interference measurement resources is less than the second threshold, a value of a bit corresponding to the L interference measurement resources may be 1. Herein, "greater than or equal to" may alternatively be "greater than", "less than" may alternatively be "less than or equal to". It should be noted that the equivalent interference degree may be an average value, a maximum value, or a minimum value of L interference degrees of the L interference measurement resources.

It should be noted that, the specific calculation method for the degree of the interference is related to that the degree of the interference is represented by the SINR/RSRP/RSSI/CQI/RSRQ/MCS. For ease of description, the following uses a specific example for description.

By way of example rather than limitation, the degree of the interference is represented by an RSRP value, and the second threshold is an RSRP threshold. For the L interference measurement resources, optionally, when an average value, a maximum value, or a minimum value of RSRP values corresponding to the L interference measurement resources is greater than or equal to the second threshold, a value of a bit corresponding to the L interference measurement resources may be 1. When the average value, the maximum value, or the minimum value of RSRP values corresponding to the L interference measurement resources is less than the second threshold, the value of the bit corresponding to the L interference measurement resources may be 0. Optionally, when an average value, a maximum value, or a minimum value of RSRP values corresponding to the L interference measurement resources is greater than or equal to the second threshold, a value of a bit corresponding to the L interference measurement resources may be 0. When the average value, the maximum value, or the minimum value of RSRP values corresponding to the L interference measurement resources is less than the second threshold, the value of the bit corresponding to the L interference measurement resources may be 1. Similarly, the foregoing method is also applicable to a case in which the second threshold is an RSRQ threshold, an SINR threshold, a CQI threshold, an MCS threshold, or another measurement parameter threshold, and only the RSRP value needs to be replaced with an RSRQ value, an SINR value, a CQI value, an MCS value, or another measured value. Herein, "greater than or equal to" may alternatively be replaced with "greater than", "less than" may alternatively be replaced with "less than or equal to".

In a possible implementation, the first threshold is a relative threshold, and is represented by a third threshold. It should be understood that the relative threshold corresponds to a degree of interference of the L interference measurement resources to the channel measurement resource. For ease of description, the following describes the method in this implementation by using an example.

Optionally, that the SINR value is measured is used as an example. For each of the L interference measurement resources corresponding to one bit, the terminal device calculates a difference between an SINR of the corresponding channel measurement resource when there is no interference of the interference measurement resource and an SINR of the channel measurement resource when there is interference of the interference measurement resource, to obtain L differences. An equivalent difference is calculated by using the L differences, where the equivalent difference is equal to an average value, a maximum value or a minimum value of the L differences, or a value determined in another calculation manner. Optionally, if the equivalent difference is greater than the third threshold, the value of the bit corresponding to the L interference measurement resources may be 1, and if the equivalent difference is greater than the third threshold, the value of the bit corresponding to the L interference measurement resources may be 0. Optionally, when the equivalent difference is greater than or equal to the third threshold, the value of the bit corresponding to the L interference measurement resources may be 0, or when the equivalent difference is less than the third threshold, the value of the bit corresponding to the L interference measurement resources may be 1. Herein, "greater than or equal to" may alternatively be "greater than", "less than" may alternatively be replaced with "less than or equal to". Optionally, that the SINR value is measured is used as an example. For each of the L interference measurement resources corresponding to one bit, the terminal device calculates an SINR of a corresponding channel measurement resource when there is no interference of the interference measurement resource and an SINR of the corresponding channel measurement resource when there is interference of the interference measurement resource, to obtain L first SINRs and L second SINRs. Each interference measurement resource corresponds to one first SINR and one second SINR, where the first SINR is an SINR of a channel measurement resource without interference of the interference measurement resource, and the second SINR is an SINR of a channel measurement resource without interference of the interference measurement resource. The terminal device calculates a first equivalent SINR and a second equivalent SINR based on the L first SINRs and the L second SINRs, where the first equivalent SINR is an average value, a maximum value, or a minimum value of the L first SINRs, or a value determined in another calculation manner, and the second equivalent SINR is an average value, a maximum value, or a minimum value of the L second SINRs, or a value determined in another calculation manner. A difference between the first equivalent SINR and the second equivalent SINR is calculated. Optionally, when the difference is greater than or equal to the third threshold, the value of the bit corresponding to the L interference measurement resources may be 1. When the difference is less than the third threshold, it is considered that the value of the bit corresponding to the L interference measurement resources may be 0. Optionally, when the difference is greater than or equal to the third threshold, the value of the bit corresponding to the L interference measurement resources may be 0. Optionally, when the difference is less than the third threshold, the value of the bit corresponding to the L interference measurement resources may be 1. Herein, "greater than or equal to" may alternatively be "greater than", "less than" may alternatively be replaced with "less than or equal to".

Optionally, that the SINR value is measured is used as an example. For L interference measurement resources corresponding to one bit, the terminal device calculates an equivalent interference strength of the L interference measurement resources. The equivalent interference strength may be an average value, a maximum value, a minimum value of signal strengths (RSRPs) of the L interference measurement resources, or a value determined in another calculation manner. For the corresponding channel measurement resource, the terminal device may calculate a third equivalent SINR and a fourth equivalent SINR. The fourth equivalent SINR is an SINR that is of the channel measurement resource and that is obtained through calculation with using the equivalent interference strength as interference. The third equivalent SINR is an SINR that is of the channel measurement resource and that is obtained through calculation without using the equivalent interference strength as interference. The terminal device further calculates a difference between the third equivalent SINR and the fourth equivalent SINR. Optionally, if the difference is greater than or equal to a third threshold, the value of the bit corresponding to the L interference measurement resources may be 1, and if the difference is less than the third threshold, the value of the bit corresponding to the L interference measurement resources may be 0. Optionally, when the difference is greater than or equal to the third threshold, the value of the bit corresponding to the L interference measurement resources may be 0. When the difference is less than the third threshold, the value of the bit corresponding to the L interference measurement resources may be 1. Herein, "greater than or equal to" may alternatively be "greater than", "less than" may alternatively be replaced with "less than or equal to".

It should be noted that the method described in the foregoing example is also applicable to a case in which the measured value is the RSRQ, the SINR, the CQI, the MCS, or another measurement value, and the SINR is replaced with the RSRQ, the RSRP, the CQI, the MCS, or the another measurement value.

It should be specially noted that the CQI is obtained by quantizing the SINR, and there is a correspondence between the CQI and the SINR. The MCS is obtained through CQI quantization, and there is a correspondence between the MCS and the CQI. When the CQI and the MCS are measured, the SINR value may be first measured, and then a corresponding CQI value is obtained based on the correspondence between the CQI and the SINR; or the SINR value is first measured, a corresponding CQI value is obtained based on the correspondence between the CQI and the SINR, and then a corresponding MCS value is obtained based on the correspondence between the CQI and the MCS. The foregoing correspondence method is also applicable to calculation of various equivalent CQIs and equivalent MCSs. For ease of description, the following describes the method in this implementation by using an example.

Specifically, that the CQI value is measured is used as an example. The terminal device needs to determine one first equivalent CQI and one second equivalent CQI, determine whether a difference between the first equivalent CQI and the second equivalent CQI is greater than a third threshold, to determine whether a degree of interference of the L interference measurement resources to a channel measurement resource reaches a third threshold, and further determine a value of a corresponding bit. The first equivalent CQI and the second equivalent CQI may be obtained by using the following method.

Optionally, the terminal device may determine the L first SINRs and the L second SINRs according to the foregoing method. Based on a correspondence between an SINR and a CQI, one first CQI may be determined for each first SINR, and one second CQI may be determined for each second SINR. In other words, L first CQIs and L second CQIs may be obtained. An average value, a maximum value, or a minimum value of the L first CQIs is used as the first equivalent CQI, and an average value, a maximum value, or a minimum value of the L second CQIs is used as the second equivalent CQI.

Optionally, the terminal device may determine one first equivalent SINR and one second equivalent SINR according to the foregoing method, and then determine, based on the correspondence between an SINR and a CQI, the first equivalent CQI based on the first equivalent SINR and the second equivalent CQI based on the second equivalent SINR.

Optionally, the terminal device may determine one third equivalent SINR and one fourth equivalent SINR according to the foregoing method, and then determine, based on the correspondence between an SINR and a CQI, a third equivalent CQI based on the third equivalent SINR, and determine a fourth equivalent CQI based on the fourth equivalent SINR.

Specifically, that the MCS value is measured is used an example. The terminal device needs to determine one first equivalent MCS and one second equivalent MCS, determine whether a difference between the first equivalent MCS and the second equivalent MCS is greater than a third threshold, to determine whether a degree of interference of the L interference measurement resources to a channel measurement resource reaches a third threshold, and further determine a value of a corresponding bit. The first equivalent MCS and the second equivalent MCS may be obtained by using the following method.

Optionally, the terminal device may determine the L first SINRs and the L second SINRs according to the foregoing method. Based on a correspondence between an SINR and a CQI, one first CQI may be determined for each first SINR, and one second CQI may be determined for each second SINR. In other words, L first CQIs and L second CQIs may be obtained. According to a correspondence between a CQI and an MCS, one first MCS may be determined for each first CQI, and one second MCS may be determined for each second CQI. In other words, L first MCSs and L second MCSs may be obtained. An average value, a maximum value, or a minimum value of the L first MCSs is used as the first equivalent MCS, and an average value, a maximum value, or a minimum value of the L second MCSs is used as the second equivalent MCS.

Optionally, the terminal device may determine one first equivalent SINR and one second equivalent SINR according to the foregoing method, and then determine, based on the correspondence between an SINR and a CQI, the first equivalent CQI based on the first equivalent SINR and the second equivalent CQI based on the second equivalent SINR. Then, the terminal device determines, based on the correspondence between the CQI and the MCS, the first equivalent MCS based on the first equivalent CQI, and the second equivalent MCS based on the second equivalent CQI.

Optionally, the terminal device may determine one third equivalent SINR and one fourth equivalent SINR according to the foregoing method, and then determine, based on the correspondence between an SINR and a CQI, a third equivalent CQI based on the third equivalent SINR, and determine a fourth equivalent CQI based on the fourth equivalent SINR. Then, the terminal device determines, based on the correspondence between the CQI and the MCS, the third equivalent MCS based on the third equivalent CQI, and the fourth equivalent MCS based on the fourth equivalent CQI.

In some embodiments, a plurality of bits may be used to correspond to interference of one or more interference measurement resources. By way of example rather than limitation, two bits may be used to correspond to interference of one or more interference measurement resources. Correspondingly, a plurality of thresholds are set to form a threshold gradient. For example, interference degrees are classified into relatively strong interference, strong interference, weak interference, and relatively weak interference based on the threshold gradient, or classified into level-1 interference, level-2 interference. Interference of the one or more interference measurement resources corresponding to more bits is similar to that in the foregoing example. This is not specially limited in this application.

In some embodiments, the measurement configuration information sent by the network device configures both the N channel measurement resources and the plurality of interference measurement resources respectively corresponding to the N channel measurement resources. Optionally, the terminal device may determine the N bitmaps corresponding to the N channel measurement resources, and send the N bitmaps to the network device. A method for determining a bitmap corresponding to each channel measurement resource is the same as that in the foregoing method. For details, refer to the foregoing method. Optionally, the terminal device may alternatively determine a bitmap and send the bitmap to the network device. A plurality of consecutive bits in the bitmap may represent interference corresponding to one piece of measurement configuration information. This is not limited in this application.

S303: The terminal device sends the bitmap to the network device.

In some preferred embodiments, the terminal device feeds back the bitmap to the network device. A value of the bit in the bitmap indicates interference of each interference measurement resource to the channel measurement resource.

In some embodiments, the terminal device feeds back, to the network device, information about each interference measurement resource that reaches a specific interference degree. By way of example rather than limitation, the terminal device may report information about each interference measurement resource that reaches the first threshold, for example, reports an index of an interference measurement resource set.

In some embodiments, the terminal device feeds back, to the network device, information about each interference measurement resource that does not reach the specific interference degree. By way of example rather than limitation, the terminal device may report information about each interference measurement resource that does not reach the first threshold, for example, report an index of an interference measurement resource set.

In some embodiments, each of the M channel measurement resources configured by the network device has one or more corresponding interference measurement resources, and the terminal device may choose to report interference results of interference measurement resources corresponding to all the M channel measurement resources at a time; or may report an interference result of an interference measurement resource set corresponding to K (K ≥ 1) channel measurement resources at a time. In a possible implementation, a value of K may be configured by the network device, may be included in the measurement configuration information, or may be reported in a capability reporting process of the terminal device. This is not limited in this application.

According to the communication method provided in this embodiment of this application, the terminal device can report a result of interference of each interference measurement resource to a channel measurement resource in a bitmap manner, to save transmission resources. In this way, when simultaneously transmitting data to a plurality of terminal devices by using a plurality of beams, the network device can avoid simultaneously transmitting a plurality of beams with relatively strong interference, to reduce mutual interference and improve transmission performance.

FIG. 4 is a schematic diagram of a communication apparatus 400 according to an embodiment of this application. The communication apparatus may be configured to perform a method or step corresponding to a terminal device in the method 300. The communication apparatus 400 includes:
a transceiver unit 401, configured to receive measurement configuration information; and
a processing unit 402, configured to determine a bitmap.

Preferably, the measurement configuration information is used to configure M (M ≥ 1) interference measurement resources and one channel measurement resource for the processing unit 402. It should be noted that the channel measurement resource corresponds to a serving beam and is used to measure information corresponding to the serving beam, and the interference measurement resource corresponds to an interfering beam and is used to measure information corresponding to the interfering beam.

It should be noted that the M interference measurement resources may be included in a resource setting (resource setting), a resource set (resource set), or a resource subset (resource subset).

Optionally, N (N > 1) channel measurement resources and a plurality of interference measurement resource sets respectively corresponding to the N channel measurement resources may be simultaneously configured in the measurement configuration information. A quantity of the plurality of interference measurement resources corresponding to each channel measurement resource may be the same or may be different.

It should be noted that the N channel measurement resources may be included in one resource setting, or one resource set, or one resource subset, or the N channel measurement resources may be separately included in N resource settings, or N resource sets, or N resource subsets. It should be noted that a resource set is a subset of a resource setting, and one resource setting may include one or more resource sets. A resource subset is a subset of a resource set. One resource set may include one or more resource subsets.

Optionally, information about the to-be-measured interference measurement resource may be indicated by using MAC CE signaling or DCI signaling.

Optionally, information about the to-be-measured interference measurement resource may be indicated by using MAC CE signaling or DCI signaling.

In some embodiments, the network device indicates, by using the MAC CE signaling, the information about the to-be-measured interference measurement resource. The signaling includes one or more of the following: an index of the interference measurement resource, an index of an interference measurement resource set (for example, a resource set index or a resource setting index), information (for example, index information) about a channel measurement resource or a channel measurement resource set corresponding to the interference measurement resource, information (for example, index information) about a measurement reporting configuration corresponding to the interference measurement resource, a type of the interference measurement resource, TCI-state or QCL (Quasi co-location, quasi co-location) information of the interference measurement resource, a cell corresponding to the interference measurement resource, and a BWP (Bandwidth Part, subset bandwidth) corresponding to the interference measurement resource. Optionally, the MAC CE signaling may include a bitmap, where each bit corresponds to one interference measurement resource, one group of interference measurement resources, or one interference measurement resource set, a bit value 1 indicates that a corresponding interference measurement resource is to be measured, and a bit value 0 indicates that a corresponding interference measurement resource is not to be measured. Alternatively, the bit value 0 indicates that the corresponding interference measurement resource is to be measured, and the bit value 1 indicates that the corresponding interference measurement resource is not to be measured. Optionally, the MAC CE signaling may also directly include an index of the to-be-measured interference measurement resource.

In some embodiments, DCI may indicate information about the to-be-measured interference measurement resource, including one or more of the following: an index of the interference measurement resource, an index of an interference measurement resource set (for example, a resource set index or a resource setting index), information (for example, index information) about a channel measurement resource or a channel measurement resource set corresponding to the interference measurement resource, information (for example, index information) about a measurement reporting configuration corresponding to the interference measurement resource, a type of the interference measurement resource, TCI-state or QCL (Quasi co-location, quasi co-location) information of the interference measurement resource, a cell corresponding to the interference measurement resource, and a BWP corresponding to the interference measurement resource. Optionally, the DCI indicates the to-be-measured interference measurement resource by using a field. Each field value of the field corresponds to one or a group of interference measurement resources or one or a group of interference measurement resource sets. Optionally, when a value of the field is a field value, it indicates that the terminal device is required to measure an interference measurement resource corresponding to the field value. An interference measurement resource corresponding to each field value may be configured by using the RRC signaling, or indicated by using the MAC CE signaling. It should be noted that the field may be a newly introduced field dedicated to indicating an interference measurement resource, and may be another existing field reused.

By using the foregoing method, dynamic update of the interference measurement resource can be implemented, and flexibility of configuring the interference measurement resource is improved.

It should be noted that one channel measurement resource and M interference measurement resources corresponding to the channel measurement resource are used as an example for description in this embodiment of this application.

Optionally, the measurement configuration information includes a first report quantity, and the first report quantity indicates the transceiver unit 401 to report a bitmap. Optionally, the transceiver unit 401 reports the bitmap by default.

Optionally, after the transceiver unit 401 receives the measurement configuration information, the processing unit 402 immediately performs interference measurement. Optionally, the transceiver unit 401 receives the measurement configuration information, and the processing unit 402 performs measurement based on the measurement configuration information in each preset period.

In some preferred embodiments, the bitmap includes one or more bits, and each of the one or more bits corresponds to one interference measurement resource. A value of each of the one or more bits indicates interference of one interference measurement resource corresponding to the bit to the channel measurement resource.

Specifically, a value of each bit represents a value relationship between a first threshold and a degree of the interference of the one interference measurement resource corresponding to the bit to the channel measurement resource. The processing unit 402 determines whether a degree of interference of the interference measurement resource to the channel measurement resource reaches a first threshold to determine a value of a corresponding bit. The first threshold may be an RSRP (Reference signal receiving power, reference signal received power) threshold, an RSRQ (Reference signal receiving quality, reference signal received quality) threshold, an SINR (Signal to Interference plus Noise Ratio, signal to interference plus noise ratio) threshold, a CQI (Channel Quality Indication, channel quality indication) threshold, an MCS (Modulation and Coding scheme, modulation and coding scheme) threshold, or another threshold. It should be noted that the RSRP may be obtained by directly measuring an interference channel measurement resource. In this embodiment of this application, the signal strength is represented by an RSRP, and the SINR value represents a ratio signal to noise and interference. In this embodiment of this application, the signal to interference plus noise ratio is represented by SINR or the RSRQ. Optionally, when the degree of the interference of the interference measurement resource is greater than or equal to the first threshold, a value of a bit corresponding to the interference measurement resource may be 1. When the degree of the interference of the interference measurement resource is less than the first threshold, a value of a bit corresponding to the interference measurement resource may be 0. Optionally, when the degree of the interference of the interference measurement resource is greater than or equal to the first threshold, a value of a bit corresponding to the interference measurement resource may be 0. When the degree of the interference of the interference measurement resource is less than the first threshold, a value of a bit corresponding to the interference measurement resource may be 1. Herein, "greater than or equal to" may alternatively be replaced with "greater than", "less than" may alternatively be replaced with "less than or equal to". The following describes a specific method for determining the degree of the interference.

In a possible implementation, the first threshold is an absolute threshold, and is represented by a second threshold. It should be understood that the absolute threshold corresponds to a degree of interference of an interference measurement resource to a channel measurement resource. Optionally, when the degree of the interference of the one interference measurement resource is greater than or equal to the second threshold, a value of a bit corresponding to the one interference measurement resource may be 1. When the degree of the interference of the one interference measurement resource is less than the second threshold, a value of a bit corresponding to the one interference measurement resource may be 0. Optionally, when the degree of the interference of the one interference measurement resource is greater than or equal to the second threshold, a value of a bit corresponding to the one interference measurement resource may be 0. When the degree of the interference of the one interference measurement resource is less than the second threshold, a value of a bit corresponding to the one interference measurement resource may be 1. Herein, "greater than or equal to" may alternatively be replaced with "greater than", "less than" may alternatively be replaced with "less than or equal to".

It should be noted that, the specific method for calculating the degree of the interference is related to that the degree of the interference is represented by the SINR/RSRP/CQI/RSRQ/MCS. For ease of description, the following uses a specific example for description.

By way of example rather than limitation, the degree of the interference is represented by the RSRP value, and the second threshold is an RSRP threshold. For one interference measurement resource, when an RSRP value corresponding to the interference measurement resource is greater than or equal to the second threshold, the value of the bit corresponding to the interference measurement resource is 1. When the RSRP value corresponding to the interference measurement resource is less than the second threshold, the value of the bit corresponding to the interference measurement resource is 0. Optionally, when the RSRP value corresponding to the interference measurement resource is greater than or equal to a second threshold, the value of the bit corresponding to the interference measurement resource is 0. When the RSRP value corresponding to the interference measurement resource is less than the second threshold, the value of the bit corresponding to the interference measurement resource is 1. Similarly, the foregoing method is also applicable to a case in which the second threshold is an RSRQ threshold, an SINR threshold, a CQI threshold, an MCS threshold, or another measurement parameter threshold, and only the RSRP value needs to be replaced with an RSRQ value, an SINR value, a CQI value, an MCS value, or another measured value. Herein, "greater than or equal to" may alternatively be replaced with "greater than", "less than" may alternatively be replaced with "less than or equal to".

In a possible implementation, the first threshold is a relative threshold, and is represented by a third threshold. It should be understood that the relative threshold corresponds to a degree of interference of one interference measurement resource to a channel measurement resource. By way of example rather than limitation, when interference of the one interference measurement resource is considered or when interference of the one interference measurement resource is not considered, the degree of the interference is represented by a difference of the degree of the interference of the channel measurement resource, and a value of a bit corresponding to the interference measurement resource is determined by using a value relationship between the difference and the third threshold. Optionally, when the difference is greater than or equal to the third threshold, the value of the bit corresponding to the interference measurement resource may be 1. When the difference is less than the third threshold, the value of the bit corresponding to the interference measurement resource may be 0. Optionally, when the difference is greater than or equal to the third threshold, the value of the bit corresponding to the interference measurement resource may be 0. When the difference is less than the third threshold, the value of the bit corresponding to the interference measurement resource may be 1. Herein, "greater than or equal to" may alternatively be "greater than", "less than" may alternatively be replaced with "less than or equal to".

It should be noted that, the specific method for calculating the degree of the interference is related to that the degree of the interference is represented by the SINR/RSRP/CQI/RSRQ/MCS. For ease of description, the following uses a specific example for description.

By way of example rather than limitation, the degree of the interference is represented by using an SINR value, and the third threshold is an SINR threshold. For one interference measurement resource, if a difference between an SINR value of the channel measurement resource without the interference of the interference measurement resource and an SINR value of the channel measurement resource with the interference of the interference measurement resource is greater than or equal to the third threshold, a value of a bit corresponding to the interference measurement resource is 1. If the difference between the SINR value of the channel measurement resource without the interference of the interference measurement resource and the SINR value of the channel measurement resource with the interference of the interference measurement resource is less than the third threshold, a value of a bit corresponding to the interference measurement resource may be 0. Optionally, if a difference between an SINR value of the channel measurement resource without the interference of the interference measurement resource and an SINR value of the channel measurement resource with the interference of the interference measurement resource is greater than or equal to the third threshold, a value of a bit corresponding to the interference measurement resource may be 0. If the difference between the SINR value of the channel measurement resource without the interference of the interference measurement resource and the SINR value of the channel measurement resource with the interference of the interference measurement resource is less than the third threshold, a value of a bit corresponding to the interference measurement resource may be 1. Similarly, the method is also applicable to a case in which the third threshold is the RSRQ threshold, the RSRP threshold, the CQI threshold, the MCS threshold, or another measurement parameter threshold, and only the RSRP value needs to be replaced with the RSRQ value, the RSRP value, the CQI value, the MCS value, or the another measured value. Herein, "greater than or equal to" may alternatively be replaced with "greater than", "less than" may alternatively be replaced with "less than or equal to".

In some embodiments, the bitmap includes one or more bits, and each of the one or more bits corresponds to a plurality of interference measurement resources. A value of each of the one or more bits indicates interference of a plurality of interference measurement resources corresponding to the bit to the channel measurement resource.

Optionally, the plurality of interference measurement resources are L (L > 1) consecutive interference measurement resources configured, that is, according to a configuration sequence, the L consecutive interference measurement resources are used as a group corresponding to one bit. Optionally, the L interference measurement resources may alternatively be L consecutive interference measurement resources sorted according to a resource index value sequence. Optionally, the L interference resources may alternatively be all resources configured in one resource set. In other words, the network device may configure one or more resource sets. Each resource set corresponds to one bit, or all resources in each resource set correspond to one bit. Optionally, a value of L may be indicated by measurement configuration information. Optionally, the value of L may be reported in a capability reporting process of the processing unit 402. The following describes the plurality of interference measurement resources as L interference measurement resources.

Specifically, a value of each bit represents a value relationship between a first threshold and a degree of the interference of the L interference measurement resources corresponding to the bit to the channel measurement resource. Reference may be made to the foregoing description that a value of each bit indicates a degree of interference of one interference measurement resource corresponding to the bit to the channel measurement resource. The following describes a specific method for determining the degree of the interference.

In a possible implementation, the first threshold is an absolute threshold, and is represented by a second threshold. It should be understood that the absolute threshold corresponds to a degree of interference of the L interference measurement resources to a channel measurement resource. When the absolute threshold corresponds to the L interference measurement resources, the method needs to be modified adaptively. By way of example rather than limitation, the degree of the interference is represented by using the equivalent interference degree of the L interference measurement resources. In the determining method, a value of a bit corresponding to the L interference measurement resources is determined based on a value relationship between the equivalent interference degree of the L interference measurement resources and the second threshold. Optionally, when the equivalent interference degree of the L interference measurement resources is greater than or equal to the second threshold, a value of a bit corresponding to the L interference measurement resources may be 1. When the equivalent interference degree of the L interference measurement resources is less than the second threshold, a value of a bit corresponding to the L interference measurement resources may be 0. Optionally, when the equivalent channel interference degree of the L interference measurement resources is greater than or equal to the second threshold, a value of a bit corresponding to the L interference measurement resources may be 0. When the equivalent interference degree of the L interference measurement resources is less than the second threshold, a value of a bit corresponding to the L interference measurement resources may be 1. Herein, "greater than or equal to" may alternatively be "greater than". It should be noted that the equivalent signal strength may be an average value, a maximum value, or a minimum value of L signal strengths of the L interference measurement resources. Herein, "greater than or equal to" may alternatively be replaced with "greater than", "less than" may alternatively be replaced with "less than or equal to".

It should be noted that, the specific method for calculating the degree of the interference is related to that the degree of the interference is represented by the SINR/RSRP/CQI/RSRQ/MCS. For ease of description, the following uses a specific example for description.

By way of example rather than limitation, the degree of the interference is represented by an RSRP value, and the second threshold is an RSRP threshold. For the L interference measurement resources, optionally, when an average value, a maximum value, or a minimum value of RSRP values corresponding to the L interference measurement resources is greater than or equal to the second threshold, a value of a bit corresponding to the L interference measurement resources is 1. When an average value, a maximum value, or a minimum value of RSRP values corresponding to the L interference measurement resources is less than the second threshold, a value of a bit corresponding to the L interference measurement resources may be 0. Optionally, when an average value, a maximum value, or a minimum value of RSRP values corresponding to the L interference measurement resources is greater than or equal to the second threshold, a value of a bit corresponding to the L interference measurement resources may be 0. When the average value, the maximum value, or the minimum value of RSRP values corresponding to the L interference measurement resources is less than the second threshold, the value of the bit corresponding to the L interference measurement resources may be 1. Similarly, the foregoing method is also applicable to a case in which the second threshold is an RSRQ threshold, an SINR threshold, a CQI threshold, an MCS threshold, or another measurement parameter threshold, and only the RSRP value needs to be replaced with an RSRQ value, an SINR value, a CQI value, an MCS value, or another measured value. Herein, "greater than or equal to" may alternatively be replaced with "greater than", "less than" may alternatively be replaced with "less than or equal to".

In a possible implementation, the first threshold is a relative threshold, and is represented by a third threshold. It should be understood that the relative threshold corresponds to a degree of interference of the L interference measurement resources to the channel measurement resource. For ease of description, the following describes the method in this implementation by using an example.

Optionally, that the SINR value is measured is used as an example. For each of the L interference measurement resources corresponding to one bit, the processing unit 402 calculates a difference between an SINR of the corresponding channel measurement resource when there is no interference of the interference measurement resource and an SINR of the channel measurement resource when there is interference of the interference measurement resource, to obtain L differences. An equivalent difference is calculated by using the L differences, where the equivalent difference is equal to an average value, a maximum value or a minimum value of the L differences, or a value determined in another calculation manner. Optionally, if the equivalent difference is greater than the third threshold, it is considered that the value of the bit corresponding to the L interference measurement resources may be 1, and if the equivalent difference is greater than the third threshold, the value of the bit corresponding to the L interference measurement resources may be 0. Optionally, when the equivalent difference is greater than or equal to the third threshold, the value of the bit corresponding to the L interference measurement resources may be 0, or when the equivalent difference is less than the third threshold, the value of the bit corresponding to the L interference measurement resources may be 1. Herein, "greater than or equal to" may alternatively be "greater than", "less than" may alternatively be replaced with "less than or equal to".

Optionally, that the SINR value is measured is used as an example. For each of the L interference measurement resources corresponding to one bit, the terminal device calculates an SINR of a corresponding channel measurement resource when there is no interference of the interference measurement resource and an SINR of the corresponding channel measurement resource when there is interference of the interference measurement resource, to obtain L first SINRs and L second SINRs. Each interference measurement resource corresponds to one first SINR and one second SINR, where the first SINR is an SINR of a channel measurement resource without interference of the interference measurement resource, and the second SINR is an SINR of a channel measurement resource without interference of the interference measurement resource. The terminal device calculates a first equivalent SINR and a second equivalent SINR based on the L first SINRs and the L second SINRs, where the first equivalent SINR is an average value, a maximum value, or a minimum value of the L first SINRs, or a value determined in another calculation manner, and the second equivalent SINR is an average value, a maximum value, or a minimum value of the L second SINRs, or a value determined in another calculation manner. A difference between the first equivalent SINR and the second equivalent SINR is calculated. Optionally, if the difference is greater than or equal to the third threshold, it is considered that the value of one bit corresponding to the L interference measurement resources may be 1. When the difference is less than the third threshold, it is considered that the value of one bit corresponding to the L interference measurement resources may be 0. Optionally, when the difference is greater than or equal to the third threshold, the value of the bit corresponding to the L interference measurement resources may be 0. When the difference is less than the third threshold, it is considered that the value of one bit corresponding to the L interference measurement resources may be 1. Herein, "greater than or equal to" may alternatively be "greater than", "less than" may alternatively be replaced with "less than or equal to".

Optionally, that the SINR value is measured is used as an example. For L interference measurement resources corresponding to one bit, the terminal device calculates an equivalent interference strength of the L interference measurement resources. The equivalent interference strength may be an average value, a maximum value, a minimum value of signal strengths of the L interference measurement resources, or a value determined in another calculation manner. For the corresponding channel measurement resource, the terminal device may calculate a third equivalent SINR and a fourth equivalent SINR. The fourth equivalent SINR is an SINR that is of the channel measurement resource and that is obtained through calculation with using the equivalent signal strength as interference. The third equivalent SINR is an SINR that is of the channel measurement resource and that is obtained through calculation without using the equivalent signal strength as interference. The terminal device further calculates a difference between the third equivalent SINR and the fourth equivalent SINR. Optionally, if the difference is greater than or equal to the third threshold, it is considered that the value of the bit corresponding to the L interference measurement resources is 1. When the difference is less than the third threshold, it is considered that the value of the bit corresponding to the L interference measurement resources may be 0. Optionally, when the difference is greater than or equal to the third threshold, the value of the bit corresponding to the L interference measurement resources may be 0. When the difference is less than the third threshold, it is considered that the value of the bit corresponding to the L interference measurement resources may be 1. Herein, "greater than or equal to" may alternatively be "greater than", "less than" may alternatively be replaced with "less than or equal to". It should be noted that the method described in the foregoing example is also applicable to a case in which the measured value is the RSRQ, the RSRP, the CQI, the MCS, or another measurement value, and the SINR is replaced with the RSRQ, the RSRP, the CQI, the MCS, or the another measurement value.

It should be specially noted that the CQI is obtained by quantizing the SINR, and there is a correspondence between the CQI and the SINR. The MCS is obtained through CQI quantization, and there is a correspondence between the MCS and the CQI. When the CQI and the MCS are measured, only the SINR value needs to be first measured, and then a corresponding CQI value is obtained based on the correspondence between the CQI and the SINR; or the SINR value is first measured, a corresponding CQI value is obtained based on the correspondence between the CQI and the SINR, and then a corresponding MCS value is obtained based on the correspondence between the CQI and the MCS.

For ease of description, the following describes the method in this implementation in detail by using an example.

Specifically, that the CQI value is measured is used as an example. The terminal device needs to determine one first equivalent CQI and one second equivalent CQI, determine whether a difference between the first equivalent CQI and the second equivalent CQI is greater than a third threshold, to determine whether a degree of interference of the L interference measurement resources to a channel measurement resource reaches a third threshold, and further determine a value of a corresponding bit. The first equivalent CQI and the second equivalent CQI may be obtained by using the following method.

Optionally, the terminal device may determine the L first SINRs and the L second SINRs according to the foregoing method. Based on a correspondence between an SINR and a CQI, one first CQI may be determined for each first SINR, and one second CQI may be determined for each second SINR. In other words, L first CQIs and L second CQIs may be obtained. An average value, a maximum value, or a minimum value of the L first CQIs is used as the first equivalent CQI, and an average value, a maximum value, or a minimum value of the L second CQIs is used as the second equivalent CQI.

Optionally, the terminal device may determine one first equivalent SINR and one second equivalent SINR according to the foregoing method, and then determine, based on the correspondence between an SINR and a CQI, the first equivalent CQI based on the first equivalent SINR and the second equivalent CQI based on the second equivalent SINR.

Optionally, the terminal device may determine one third equivalent SINR and one fourth equivalent SINR according to the foregoing method, and then determine, based on the correspondence between an SINR and a CQI, a third equivalent CQI based on the third equivalent SINR, and determine a fourth equivalent CQI based on the fourth equivalent SINR.

Specifically, that the MCS value is measured is used an example. The terminal device needs to determine one first equivalent MCS and one second equivalent MCS, determine whether a difference between the first equivalent MCS and the second equivalent MCS is greater than a third threshold, to determine whether a degree of interference of the L interference measurement resources to a channel measurement resource reaches a third threshold, and further determine a value of a corresponding bit. The first equivalent MCS and the second equivalent MCS may be obtained by using the following method.

Optionally, the terminal device may determine the L first SINRs and the L second SINRs according to the foregoing method. Based on a correspondence between an SINR and a CQI, one first CQI may be determined for each first SINR, and one second CQI may be determined for each second SINR. In other words, L first CQIs and L second CQIs may be obtained. According to a correspondence between a CQI and an MCS, one first MCS may be determined for each first CQI, and one second MCS may be determined for each second CQI. In other words, L first MCSs and L second MCSs may be obtained. An average value, a maximum value, or a minimum value of the L first MCSs is used as the first equivalent MCS, and an average value, a maximum value, or a minimum value of the L second MCSs is used as the second equivalent MCS.

Optionally, the terminal device may determine one first equivalent SINR and one second equivalent SINR according to the foregoing method, and then determine, based on the correspondence between an SINR and a CQI, the first equivalent CQI based on the first equivalent SINR, and the second equivalent CQI based on the second equivalent SINR. Then, the terminal device determines, based on the correspondence between the CQI and the MCS, the first equivalent MCS based on the first equivalent CQI, and the second equivalent MCS based on the second equivalent CQI.

Optionally, the terminal device may determine one third equivalent SINR and one fourth equivalent SINR according to the foregoing method, and then determine, based on the correspondence between an SINR and a CQI, a third equivalent CQI based on the third equivalent SINR, and determine a fourth equivalent CQI based on the fourth equivalent SINR. Then, the terminal device determines, based on the correspondence between the CQI and the MCS, the third equivalent MCS based on the third equivalent CQI, and the fourth equivalent MCS based on the fourth equivalent CQI.

In some embodiments, a plurality of bits may be used to correspond to interference of one or more interference measurement resources. By way of example rather than limitation, two bits may be used to correspond to interference of one or more interference measurement resources. Correspondingly, a plurality of thresholds are set to form a threshold gradient. For example, interference degrees are classified into relatively strong interference, strong interference, weak interference, and relatively weak interference based on the threshold gradient, or classified into level-1 interference, level-2 interference. This is not particularly limited in this application.

In some embodiments, the measurement configuration information sent by the network device configures both the N channel measurement resources and the plurality of interference measurement resources respectively corresponding to the N channel measurement resources. Optionally, the processing unit 402 may determine the N bitmaps corresponding to the N channel measurement resources, and send the N bitmaps to the network device. A method for determining a bitmap corresponding to each channel measurement resource is the same as that in the foregoing method. Optionally, the processing unit 402 may alternatively determine a bitmap and send the bitmap to the network device. A plurality of consecutive bits in the bitmap may represent interference corresponding to one piece of measurement configuration information. This is not limited in this application.

The transceiver unit 401 is further configured to send a bitmap to the network device.

In some preferred embodiments, the transceiver unit 401 sends the bitmap to the network device. A value of the bit in the bitmap indicates interference of each interference measurement resource to the channel measurement resource.

In some embodiments, the transceiver unit 401 sends, to the network device, information about each interference measurement resource that reaches a specific interference degree. By way of example rather than limitation, the transceiver unit 401 may report information about each interference measurement resource that reaches the first threshold, for example, reports an index of an interference measurement resource set.

In some embodiments, the transceiver unit 401 sends, to the network device, information about each interference measurement resource that does not reach a specific interference degree. By way of example rather than limitation, the transceiver unit 401 may report information about each interference measurement resource that does not reach the first threshold, for example, report an index of an interference measurement resource set.

In some embodiments, each of the M channel measurement resources configured by the network device has one or more corresponding interference measurement resources, and the transceiver unit 401 may choose to report interference results of interference measurement resources corresponding to all the M channel measurement resources at a time; or may report an interference result of an interference measurement resource set corresponding to K (K ≥ 1) channel measurement resources at a time. In a possible implementation, a value of K may be configured by the network device, may be included in the measurement configuration information, or may be reported in a capability reporting process of the transceiver unit 401. This is not limited in this application.

FIG. 5 is a schematic diagram of a communication apparatus 500 according to an embodiment of this application. The communication apparatus may be configured to perform a method or step corresponding to a network device in the method 300. The communication apparatus 500 includes:
a transceiver unit 501, configured to send measurement configuration information; and
a processing unit 502, configured to determine measurement configuration information.

Preferably, the measurement configuration information is used to configure M (M≥1) interference measurement resources and one channel measurement resource for the terminal device. It should be noted that the channel measurement resource corresponds to a serving beam and is used to measure information corresponding to the serving beam, and the interference measurement resource corresponds to an interfering beam and is used to measure information corresponding to the interfering beam.

It should be noted that the M interference measurement resources may be included in a resource setting (resource setting), a resource set (resource set), or a resource subset (resource subset).

Optionally, N (N > 1) channel measurement resources and a plurality of interference measurement resource sets respectively corresponding to the N channel measurement resources may be simultaneously configured in the measurement configuration information. A quantity of the plurality of interference measurement resources corresponding to each channel measurement resource may be the same or may be different.

It should be noted that the N channel measurement resources may be included in one resource setting, or one resource set, or one resource subset, or the N channel measurement resources may be separately included in N resource settings, or N resource sets, or N resource subsets. It should be noted that a resource set is a subset of a resource setting, and one resource setting may include one or more resource sets. A resource subset is a subset of a resource set. One resource set may include one or more resource subsets.

Optionally, information about the to-be-measured interference measurement resource may be indicated by using MAC CE signaling or DCI signaling.

In some embodiments, the transceiver unit 501 indicates, by sending the MAC CE signaling, the information about the to-be-measured interference measurement resource, where the signaling includes: an index of the interference measurement resource, an index of an interference measurement resource set corresponding to the interference measurement resource, a type of the interference measurement resource, TCI-state or QCL (Quasi co-location, quasi co-location) information of the interference measurement resource, a cell corresponding to the interference measurement resource, and a BWP (Bandwidth Part, subset bandwidth) corresponding to the interference measurement resource. Optionally, the MAC CE signaling may include a bitmap, where each bit corresponds to one interference measurement resource or a group of interference measurement resources, a bit value 1 indicates that a corresponding interference measurement resource is to be measured, and a bit value 0 indicates that a corresponding interference measurement resource is not to be measured. Alternatively, the bit value 0 indicates that the corresponding interference measurement resource is to be measured, and the bit value 1 indicates that the corresponding interference measurement resource is not to be measured. Optionally, the MAC CE signaling may also directly include an index of the to-be-measured resource.

In some embodiments, the transceiver unit 501 may indicate, by sending the DCI, the information about the to-be-measured interference measurement resource, where the DCI includes: an index of the interference measurement resource, an index of an interference measurement resource set corresponding to the interference measurement resource, a type of the interference measurement resource, TCI-state or QCL (Quasi co-location, quasi co-location) information of the interference measurement resource, a cell corresponding to the interference measurement resource, and a BWP corresponding to the interference measurement resource. Optionally, the DCI indicates the to-be-measured interference measurement resource by using a field. Each field value of the field corresponds to one or a group of interference measurement resources. Optionally, when a value of the field is a field value, it indicates that the terminal device is required to measure an interference measurement resource corresponding to the field value. An interference measurement resource corresponding to each field value may be configured by using the RRC signaling, or indicated by using the MAC CE signaling. It should be noted that the field may be a newly introduced field dedicated to indicating an interference measurement resource, and may be another existing field reused.

The transceiver unit 501 is further configured to receive the bitmap.

FIG. 6 is a schematic diagram of a communication apparatus 600 according to an embodiment of this application. The communication apparatus 600 includes a transceiver 601, a processor 602, and a memory 603. The memory 603 is configured to store instructions. The processor 602 is coupled to the memory 603, and is configured to execute the instructions stored in the memory, to perform the method provided in embodiments of this application.

Specifically, the transceiver 601 in the communication apparatus 600 may correspond to the transceiver unit 401 in the communication apparatus 400, and the processor 602 in the communication apparatus 600 may correspond to the processing unit 402 in the communication apparatus 400.

Specifically, the transceiver 601 in the communication apparatus 600 may correspond to the transceiver unit 501 in the communication apparatus 500, and the processor 602 in the communication apparatus 600 may correspond to the processing unit 502 in the communication apparatus 500.

It should be understood that the memory 603 and the processor 602 may be combined into one processing apparatus, and the processor 602 is configured to execute the program code stored in the memory 603 to implement the foregoing functions. During specific implementation, the memory 603 may alternatively be integrated into the processor 602, or may be independent of the processor 602.

It should be understood that a specific process in which the transceiver and the processor perform the foregoing corresponding steps is described in detail in the foregoing method embodiments. For brevity, details are not described herein. A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solution of this application essentially, or the part contributing to a conventional technology, or some of the technical solution may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving measurement configuration information from a network device, wherein the measurement configuration information is used to configure a channel measurement resource and M interference measurement resources, and M is a positive integer greater than or equal to 1; and
sending a bitmap to the network device, wherein the bitmap comprises one or more bits, each of the one or more bits corresponds to one or more interference measurement resources, a value of each of the one or more bits indicates interference of the one or more interference measurement resources corresponding to each bit to the channel measurement resource, and the M interference measurement resources comprise the one or more interference measurement resources.

2. The method according to claim 1, wherein the interference of the one or more interference measurement resources to the channel measurement resource comprises:
whether a degree of the interference of the one or more interference measurement resources to the channel measurement resource is greater than a first threshold.

3. The method according to claim 2, wherein when each bit corresponds to one interference measurement resource, that the degree of the interference of the one or more interference measurement resources to the channel measurement resource is greater than the first threshold comprises:
a signal strength of the one interference measurement resource is greater than a second threshold.

4. The method according to claim 2, wherein when each bit corresponds to one interference measurement resource, that the degree of the interference of the one or more interference measurement resources to the channel measurement resource is greater than the first threshold comprises:
a difference between a first signal to interference plus noise ratio of the channel measurement resource and a second signal to interference plus noise ratio of the channel measurement resource is greater than a third threshold, wherein
the first signal to interference plus noise ratio is a signal to interference plus noise ratio of the channel measurement resource when interference of the one interference measurement resource is not considered; and
the second signal to interference plus noise ratio is a signal to interference plus noise ratio of the channel measurement resource when the interference of the one interference measurement resource is considered.

5. The method according to claim 2, wherein when each bit corresponds to a plurality of interference measurement resources, that the degree of the interference of the one or more interference measurement resources to the channel measurement resource is greater than the first threshold comprises:
an average signal strength of the plurality of interference measurement resources is greater than a second threshold.

6. The method according to claim 2, wherein when each bit corresponds to a plurality of interference measurement resources, the degree of interference of the one or more interference measurement resources to the channel measurement resource is greater than the first threshold comprises:
a difference between a third signal to interference plus noise ratio of the channel measurement resource and a fourth signal to interference plus noise ratio of the channel measurement resource is greater than a third threshold, wherein
the third signal to interference plus noise ratio is a signal to interference plus noise ratio of the channel measurement resource when interference of the plurality of interference measurement resources is not considered; and
the fourth signal to interference plus noise ratio is a signal to interference plus noise ratio of the channel measurement resource that is determined by using an average interference strength of the plurality of interference measurement resources as interference.

7. The method according to any one of claims 2 to 6, wherein the first threshold, and/or the second threshold, and/or the third threshold are configured by using the measurement configuration information.

8. The method according to claim 1, wherein when each bit corresponds to a plurality of interference measurement resources, the plurality of interference measurement resources are a plurality of consecutive interference measurement resources determined based on a configuration sequence of the interference measurement resources.

9. A communication method, comprising:
sending measurement configuration information to a terminal device, wherein the measurement configuration information is used to configure a channel measurement resource and M interference measurement resources, and M is a positive integer greater than or equal to 1; and
receiving a bitmap from the terminal device, wherein the bitmap comprises one or more bits, each of the one or more bits corresponds to one or more interference measurement resources, a value of each of the one or more bits indicates interference of the one or more interference measurement resources corresponding to each bit to the channel measurement resource, and the M interference measurement resources comprise the one or more interference measurement resources.

10. The method according to claim 9, wherein the method further comprises:
determining, based on the bitmap, the interference of the one or more interference measurement resources to the channel measurement resource.

11. The method according to claim 9 or 10, wherein the interference of the one or more interference measurement resources to the channel measurement resource comprises:
whether a degree of the interference of the one or more interference measurement resources to the channel measurement resource is greater than a first threshold.

12. A communication apparatus, comprising:
a transceiver unit, configured to receive measurement configuration information from a network device, wherein the measurement configuration information is used to configure a channel measurement resource and M interference measurement resources, and M is a positive integer greater than or equal to 1, wherein
the transceiver unit is further configured to send a bitmap to the network device, wherein the bitmap comprises one or more bits, each of the one or more bits corresponds to one or more interference measurement resources, a value of each of the one or more bits indicates interference of the one or more interference measurement resources corresponding to each bit to the channel measurement resource, and the M interference measurement resources comprise the one or more interference measurement resources.

13. The communication apparatus according to claim 12, wherein the interference of the one or more interference measurement resources to the channel measurement resource comprises:
whether a degree of the interference of the one or more interference measurement resources to the channel measurement resource is greater than a first threshold.

14. The communication apparatus according to claim 13, wherein when each bit corresponds to one interference measurement resource, that the degree of the interference of the one or more interference measurement resources to the channel measurement resource is greater than the first threshold comprises:
a signal strength of the one interference measurement resource is greater than a second threshold.

15. The communication apparatus according to claim 13, wherein when each bit corresponds to one interference measurement resource, that the degree of the interference of the one or more interference measurement resources to the channel measurement resource is greater than the first threshold comprises:
a difference between a first signal to interference plus noise ratio of the channel measurement resource and a second signal to interference plus noise ratio of the channel measurement resource is greater than a third threshold, wherein
the first signal to interference plus noise ratio is a signal to interference plus noise ratio of the channel measurement resource when interference of the one interference measurement resource is not considered; and
the second signal to interference plus noise ratio is a signal to interference plus noise ratio of the channel measurement resource when the interference of the one interference measurement resource is considered.

16. The communication apparatus according to claim 13, wherein when each bit corresponds to a plurality of interference measurement resources, that the degree of the interference of the one or more interference measurement resources to the channel measurement resource is greater than the first threshold comprises:
an average signal strength of the plurality of interference measurement resources is greater than a second threshold.

17. The communication apparatus according to claim 13, wherein when each bit corresponds to a plurality of interference measurement resources, that the degree of the interference of the one or more interference measurement resources to the channel measurement resource is greater than the first threshold comprises:
a difference between a third signal to interference plus noise ratio of the channel measurement resource and a fourth signal to interference plus noise ratio of the channel measurement resource is greater than a third threshold, wherein
the third signal to interference plus noise ratio is a signal to interference plus noise ratio of the channel measurement resource when interference of the plurality of interference measurement resources is not considered; and
the fourth signal to interference plus noise ratio is a signal to interference plus noise ratio of the channel measurement resource that is determined by using an average interference strength of the plurality of interference measurement resources as interference.

18. The communication apparatus according to any one of claims 13 to 17, wherein the first threshold, and/or the second threshold, and/or the third threshold are configured by using the measurement configuration information.

19. The communication apparatus according to claim 12, wherein when each bit corresponds to a plurality of interference measurement resources, the plurality of interference measurement resources are a plurality of consecutive interference measurement resources determined based on a configuration sequence of the interference measurement resources.

20. A communication apparatus, comprising:
a transceiver unit, configured to send measurement configuration information to a terminal device, wherein the measurement configuration information is used to configure a channel measurement resource and M interference measurement resources, and M is a positive integer greater than or equal to 1, wherein
the transceiver unit is further configured to receive a bitmap from the terminal device, wherein the bitmap comprises one or more bits, each of the one or more bits corresponds to one or more interference measurement resources, a value of each of the one or more bits indicates interference of the one or more interference measurement resources corresponding to each bit to the channel measurement resource, and the M interference measurement resources comprise the one or more interference measurement resources.

21. The communication apparatus according to claim 20, wherein the communication apparatus further comprises:
a processing unit, configured to determine, based on the bitmap, the interference of the one or more interference measurement resources to the channel measurement resource.

22. The communication apparatus according to claim 21, wherein the interference of the one or more interference measurement resources to the channel measurement resource comprises:
whether a degree of the interference of the one or more interference measurement resources to the channel measurement resource is greater than a first threshold.

23. A communication system, comprising the communication apparatus according to any one of claims 12 to 19 and the communication apparatus according to any one of claims 20 to 22.

24. A computer-readable storage medium, comprising a computer program, wherein when the computer program is executed on a computer, the computer is enabled to perform the method according to any one of claims 1 to 11.

25. A chip, comprising a processor and a memory, wherein the memory is configured to store a computer program, and the processor is configured to invoke and run a computer medium stored in the memory, to perform the method according to any one of claims 1 to 11.
